# EUROPEAN PATENT SPECIFICATION

(11) **EP 1 375 964 B1**
(45) Date of publication and mention of the grant of the patent: **29.10.2008**
(21) Application number: 03077968.0
(22) Date of filing: 14.09.1999
(51) Int. Cl.: F16H 7/08

(54) **Hydraulic tensioner with pivotal mount**
Hydraulischer Spanner mit Schwenklager
Tensionneur hydraulique avec support rotatoire

(30) Priority: 21.09.1998 US 101215 P; 01.09.1999 US 387781
(43) Date of publication of application: 02.01.2004
(62) Divisional of application: 99307280.0
(73) Proprietor: BorgWarner, Inc., Auburn Hills, MI 48326-2872 (US)
(72) Inventor: Simpson, Roger T., Ithaca, NY 14850 (US); Smith, Franklin R., Cortland, NY 13045 (US)
(74) Representative: Hedges, Martin Nicholas

(56) References cited:
- WO-A-96/36823
- DE-C- 19 500 940
- GB-A- 2 307 022
- US-A- 5 718 650

## Description

This invention relates to a hydraulic tensioner having a piston and body or sleeve pivotally mounted to a tensioner arm and tensioner housing. More particularly, the present invention relates to a hydraulic tensioner in which a first end of the tensioner is pinned or pivotally mounted to a tensioner arm while the second end of the tensioner body, located opposite the first end, is pivotally mounted to an engine block or other mounting block.

Hydraulic tensioners are typically used as a control device for a chain drive system in an automobile timing system. The tension in the chain can vary greatly due to the wide variation in the temperature and the linear thermal expansion among the various parts of the engine. Moreover, wear to the chain components during prolonged use can produce a decrease in the tension of the chain.

A hydraulic tensioner is conventionally used to take up the slack in the chain that connects the crankshaft to the camshaft in an engine timing system. The typical hydraulic tensioner includes a housing with a bore, a hollow piston slidably received in the bore and a fluid chamber defined by the piston and the bore. The piston is biased in a protruding direction from the bore by a spring. A check valve is also included in the hydraulic tensioner to permit fluid flow from a source of pressurized fluid into the fluid chamber, while preventing back flow in the reverse direction. The piston is typically pressed against a tensioner arm or other device to provide tension to the chain. The force of the chain against the piston in an inward direction is balanced by the resistance force of the fluid and force of the spring in an outward direction.

US-A-5718650, upon which the precharacterising clause of claim 1 is based, discloses a generally cylindrical hollow body having a closed and an open end; a hollow piston having a closed end and an open end, said piston being slidably received within said hollow body, said open end of said piston being slidably received in said body to form a fluid chamber with said body; a spring positioned within said hollow piston, said spring biasing said piston in a protruding direction from said body; a fluid passage which extends from the chamber, in use, to a source of pressurized fluid so as to connect said source of pressurised fluid to said chamber; and a check valve positioned to permit fluid flow into the fluid chamber from said fluid passage while blocking flow in the reverse direction.

According to the present invention, there is provided a hydraulic tensioner comprising: a generally cylindrical hollow body having a closed and an open end; a hollow piston having a closed end and an open end, said piston being slidably received within said hollow body, said open end of said piston being slidably received in said body to form a fluid chamber with said body; a spring positioned within said hollow piston, said spring biasing said piston in a protruding direction from said body; a fluid passage which extends from the chamber, in use, to a source of pressurized fluid so as to connect said source of pressurised fluid to said chamber; and a check valve positioned to permit fluid flow into the fluid chamber from said fluid passage while blocking flow in the reverse direction; characterised in that said closed end of the piston is adapted for pivotal mounting of said piston, in use, to an engine; and said closed end of said body is adapted for pivotal mounting of said body, in use, to a tensioner arm, said fluid passage being formed in the closed end of said piston.

In one embodiment of the present invention the closed end of the piston is spherically-shaped and incorporates an oil feed from a ball and socket inlet port. The oil feed inlet port is mounted to said engine head or block.

In the present invention, as the chain slackens, the force of the spring moves the piston away from the base of the sleeve and fluid is caused to flow into the fluid chamber. As the chain tightens, the force of the chain inward against the piston is balanced by the force of the spring and the resistance force of the fluid chamber.

Preferably a pivot pin disposed with the pivot connection permits pivotal mounting of the tensioner arm. The spherically-shaped end of the sleeve is also received or held in a spherically-shaped body, which is mounted to an engine block. The spherically-shaped body provides a fluid passage from the source of pressurized fluid to the fluid passage in the sleeve.

In another embodiment, the spherically-shaped body is located within a tensioner housing. In yet another embodiment, the sleeve is pivotally connected to the tensioner arm and the piston has a spherically-shaped end that is held in the mounting block. A retaining ring is placed along the outside of the piston. The retaining ring fits into a groove machined into the sleeve when the piston reaches its uppermost point, that is, the point furthest out of the sleeve, and prevents further outward movement.

Fluid is supplied by a reservoir and flows through a passageway to the check valve and into the pressurized chamber. To produce a pressure differential, a compression spring is commonly used to provide a bias force on the tensioner piston. This produces a vacuum in the chamber as the piston is urged away from the check valve and permits flow through the valve into the chamber. As the chain slackens and tightens, the piston protrudes and withdraws in response to the vibration of the chain. The outward force of the spring and fluid on the piston balances the inward force of the chain on the piston.

In yet another embodiment, the tensioner has a mounting hole formed in a bottom end of the sleeve of the tensioner opposite the open end of the sleeve. A mounting pin is inserted into the mounting hole of the tensioner. The mounting pin allows pivoting of the tensioner housing around the central axis of the pin. In other words, the mounting pin limits the rotational direction of the tensioner to a plane perpendicular to the longitudinal axis of the pin. The mounting pin may be an integral part of a mounting plate fastened to the engine or may be part of a separate mounting pin assembly fastened to the engine. The mounting pin may have retaining clips or other fastening means to keep the tensioner body mounted upon the pin. In addition, the mounting pin may have 0-rings positioned around the shaft of the pin to provide a fluid seal between the pin and the tensioner.

In order that the invention may be well understood, there will now be described some embodiments thereof, given by way of example, reference being made to the accompanying drawings, in which :
FIG. 1 is a front sectional view of an embodiment of the hydraulic tensioner which does not form part of the present invention in the retracted position;
FIG. 2 is a front sectional view of the hydraulic tensioner of FIG. 1 in the extended position;
FIG. 3 is a side sectional view of the hydraulic tensioner of FIG. 1 contacting a mounting block that is attached to the engine;
FIG. 4 is a side sectional view of another embodiment of the hydraulic tensioner which does not form part of the present invention;
FIG. 5 is a front sectional view of a first embodiment of the hydraulic tensioner of the present invention mounted to a cartridge in the retracted position
FIG. 6 is a front sectional view of the hydraulic tensioner of FIG. 7 in the extended position
FIG. 7 is a side sectional view of the hydraulic tensioner of FIG. 5.

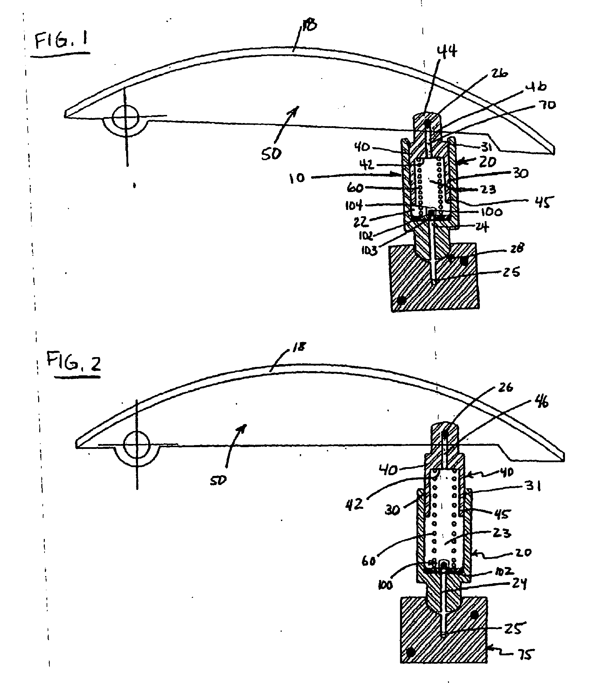

FIG. 1 illustrates a first hydraulic tensioner which does not form part of the present invention. As installed, the tensioner includes a body or sleeve 20 having a hollow center 23. The center forms a fluid chamber that is filled with fluid from a pressurized source of fluid that travels through a passageway 24 from an oil feed 25. The use of a hollow sleeve for a piston bore permits greater control over the internal diameter manufacturing tolerances in contrast to a tensioner formed from cast iron into which a bore is drilled or cut. The sleeve 20 is preferably formed on a lathe or screw machine, which provides greater tolerance control than a typical boring machine.

The sleeve 20 receives a piston, or plunger, 40 in the hollow center 23. The generally cylindrical, hollow piston 40 forms a fluid chamber 23 with the center of the sleeve 20. The piston 40 has an inside 42 and a closed end 44 opposite the open end 45. An aperture 46 is located in the center of the closed upper end 44. A retention ring 30 surrounds the piston 40. As the piston 40 extends, the ring will expand into a groove 31 within the sleeve center 23 and limit the upper or outer movement of the piston 40, as shown in FIG. 2. As a result, the piston 40 will stay within the sleeve 20 at all times.

A spring 60 contacts the inside 42 of the upper end of the piston 40 to bias the piston 40 in a protruding or outward direction from the sleeve 20. A tensioner arm 50 is pivotally mounted to the upper end 44 by a pivot pin 26 to provide tension along a chain strand. The groove or top portion of the arm 18 provides a chain wear surface that is in contact with the chain to be tensioned. Preferably, the top of the arm 18 is arcuately shaped to provide a suitable chain travel surface. Of course, it will be understood by one skilled in the art that the top of the arm 18 can have any suitable shape as dictated by manufacturing concerns.

A check valve 100 is provided between the chamber 20 and the passageway 24 to the oil feed 25 to permit fluid flow into the chamber 20, while blocking back flow in the reverse direction. The check valve 100 includes a ball 102, valve seat 103, and ball retainer 104. During start-up of the hydraulic chain tensioner 10 at normal operating conditions, a low pressure condition is created in the chamber 23, which causes fluid to enter through check valve 100 and passageway 24 and fills up the chamber 23. The pressure differential across the check valve 100 opens the valve and allows fluid flow into the chamber 23. The piston 40 is shown in an extended position in FIG. 2. When the chamber 23 fills, and the piston is pushed inward by the chain, the check valve 100 closes and prevents flow in the reverse direction out of the chamber 23. During operation, the force of the chain against the piston 40 is balanced by the force of the spring 60 and the pressurized fluid in the chamber 23.

The tensioner 10 also includes a vent 70 that can be formed from sintered powdered metal, an alloy of stainless steel, bronze, Monel, Iconel, Carpenter 20 or nickel, as known in the powder metallurgy art. The sintered powdered metal is in the form of a porous cake. The vent permits air to escape from the top of the chamber, but prevents flow of large quantities of oil out of the tip of the chamber and piston.

The tensioner 10 includes a source or reservoir of fluid, such as oil, at the inlet to the tensioner 10 such that it can draw oil from this reservoir to fill the chamber.

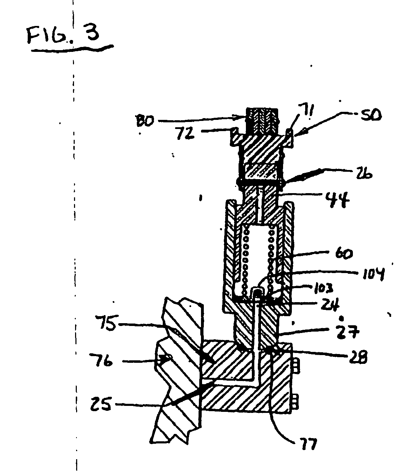

In FIG. 3, a side view of the embodiment of Figure 1. The chain 80 is guided by tensioner arm 50, which has raised sides 71 and 72. The pivot pin 26 pivotally connects the tensioner or guide arm 50 to the upper end 44 of the piston 40. At the other end, the spherically-shaped end of the sleeve contacts a mounting block 75, which is attached to the engine (shown schematically at 76). Oil feed 25 passes from the engine 76 through the mounting block 75 and into passageway 24 in the closed end of the sleeve. The mounting block 75 may incorporate an oil reservoir for the tensioner to draw in oil during start-up or low oil pressure conditions.

The bottom 27 of the sleeve is in the shape of a sphere so that it fits into a corresponding spherical mounting receptacle 28. An O-ring seal 77 may be included between the bottom 27 of the tensioner and the mounting receptacle 28, as shown in FIG. 3. As an alternative to the tensioner being mounted onto the mounting block 75, the tensioner 10 may be mounted directly onto the engine 76, with the oil feed running directly through the engine into passageway 24.

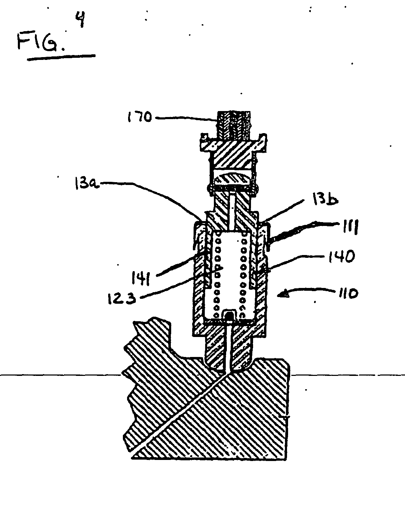

In FIG. 4, another hydraulic tensioner which does not form part of the present invention is illustrated. The tensioner 110 includes a spring clip rack 111. The piston 140 has rack grooves 141 formed along its outside surface. In this embodiment, the rack system prevents the piston 140 from being pushed into the chamber or bore 123 while the engine is stopped. Clips 13a and 13b press against the grooves formed in the piston 140 to prevent the piston 140 from being pushed inward. After the clips 13a and 13b pass the last groove, the clips 13a and 13b snap toward the minor diameter of the piston 140. The last groove is shaped as a step, rather than a wedge, so that clips 13a and 13b will catch in the last raised portion of the piston 140 and stop the piston 140 from leaving the tensioner.

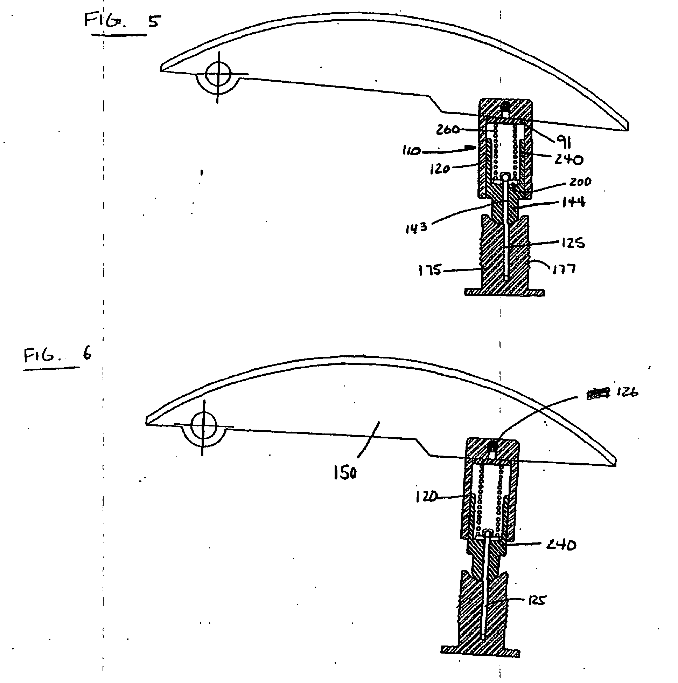

FIG. 5 illustrates a first embodiment of the hydraulic tensioner of the invention. In this embodiment, the sleeve is pivotally mounted to the tensioner arm and the piston is positioned against the mounting block. The mounting block incorporates an oil feed 125 that sends fluid through a passage 143 in the piston nose 144. The check valve 200 is located in the piston, rather than in the sleeve. The spring 260 biases the piston away from the sleeve, but is pressed against the check valve at the piston end and against a disc-shaped vent 91 at the sleeve end.

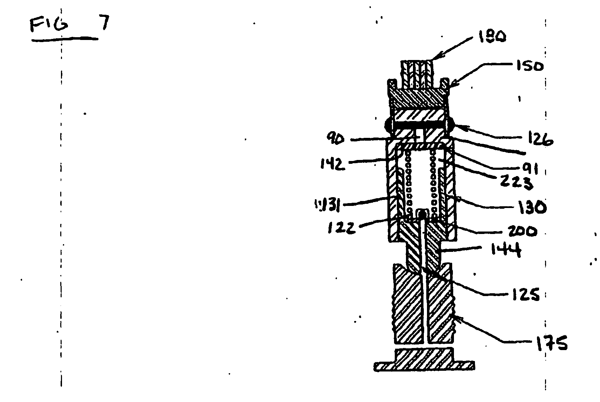

The piston 240 can be mounted to a mounting block or directly to the engine block. In Figures 5 and 6, the piston is mounted to a cartridge style tensioner body 175. The cartridge body has threaded groove 177 on its outside and can be threaded into the engine block or other mounting block or area. As shown in FIG. 6, the sleeve 120, which pivotally connects the tensioner arm 150 at pivot pin 126, extends outward to provide tension for a chain. By pinning the sleeve 120 to the tensioner arm 150, the tensioner and arm can be shipped as an assembly, and the number of components assembled onto the engine is reduced. In this tensioner, the sleeve moves relative to the piston 240, which is held against the mounting block. A side view of the third embodiment is shown is FIG. 7, where oil feed 125 flows through cartridge 175 into the piston nose 144. Check valve 200 permits fluid flow into the fluid chamber 122, while blocking back flow in the reverse direction. A retention ring 130 surrounds the piston 240. As the piston 240 extends, the ring 130 will expand into a groove 131 within the bore 223 and limit the relative movement of the sleeve 120 and piston to a predetermined amount. As a result, the piston 240 will stay with the sleeve 120 at all times. The chain 180 is guided by guide arm 150. The pivot pin 126 holds the guide arm 150 to the upper end of the sleeve.

Instead of a cartridge insert, the sleeve of piston may be mounted to a mounting block with the oil feed located within the mounting block. As an alterative to the mounting block, the sleeve or piston may be mounted directly onto the engine block with the oil feed running from the engine to the fluid chamber.

## Claims

1. A hydraulic tensioner comprising:
a generally cylindrical hollow body (20) having a closed and an open end;
a hollow piston (40) having a closed end (44) and an open end (45), said piston (40) being slidably received within said hollow body (20), said open end (45) of said piston (40) being slidably received in said body (20) to form a fluid chamber (23) with said body (20);
a spring (60) positioned within said hollow piston (40), said spring (60) biasing said piston (40) in a protruding direction from said body (20);
a fluid passage (24,143) which extends from the chamber (23), in use; to a source of pressurized fluid (25,125) so as to connect said source of pressurised fluid (25,125) to said chamber (23); and
a check valve (100,200) positioned to permit fluid flow into the fluid chamber (23) from said fluid passage (24,143) while blocking flow in the reverse direction;
**characterised in that** said closed end (44) of the piston (40) is adapted for pivotal mounting of said piston, in use, to an engine; and said closed end of said body (20) is adapted for pivotal mounting of said body (20), in use, to a tensioner arm, said fluid passage (24,143) being formed in the closed end of said piston.

2. A hydraulic tensioner according to claim 1 wherein the closed end of piston (40) is spherically-shaped for engagement, in use, in a complimentary shaped recess in an engine block, said fluid passage (24,143) extending through said spherically-shaped end and, in use, connecting to a source of pressurised fluid so as to provide a fluid passage from said source of pressurised fluid to said fluid passage in said body.

3. A hydraulic tensioner according to claim 1 or claim 2, wherein said closed end of said piston (40) includes a pivot pin (26) at its closed end by means of which, in use, said closed end of said piston (40) is pivotally attached to said engine.

4. A hydraulic tensioner according to claim 1 or claim 2, wherein said closed end of said body (20) is pivotally mounted on a mounting pin, which, in use, is mounted to said tensioner arm.

5. The hydraulic tensioner according to any of claims 1 to 3, wherein said closed end of said body (20) is spherically-shaped and engages in use, in a spherically-shaped recess in said tensioner arm pivotally mounted thereon.

6. A hydraulic tensioner according to claim 1 or claim 5, further comprising an O-ring seal which, in use, engages between the or each spherically shaped closed end and its associated spherically-shaped recess (28).

7. A hydraulic tensioner system comprising:
an engine (76); a tensioner arm (50); and
a hydraulic tensioner according to any of the preceding claims.

## Patentansprüche

1. Hydraulischer Spanner, der Folgendes umfasst:
einen allgemein zylindrischen Hohlkörper (20) mit einem geschlossenen und einem offenen Ende;
einen Hohlkolben (40) mit einem geschlossenen Ende (44) und einem offenen Ende (45), wobei der Kolben (40) verschiebbar in dem Hohlkörper (20) aufgenommen ist, wobei das offene Ende (45) des Kolbens (40) verschiebbar in dem Körper (20) aufgenommen ist, um eine Fluidkammer (23) mit dem Körper (20) zu bilden;
eine in dem Hohlkolben (40) positionierte Feder (60), die den Kolben (40) in einer vorragenden Richtung vom Körper (20) vorbelastet;
einen Fluidkanal (24, 143), der sich im Gebrauch von der Kammer (23) zu einer Druckfluidquelle (25, 125) erstreckt, um die Druckfluidquelle (25, 125) mit der Kammer (23) zu verbinden; und
ein Rückschlagventil (100, 200), das so positioniert ist, dass es Fluidstrom in die Fluidkammer (23) von dem Fluidkanal (24, 143) gestattet, während es Strom in die umgekehrte Richtung sperrt;
**dadurch gekennzeichnet, dass** das geschlossene Ende (44) des Kolbens für eine Schwenkbefestigung des Kolbens im Gebrauch an einem Motor ausgeführt ist; und das geschlossene Ende des Körpers (20) für eine Schwenkbefestigung des Körpers (20) im Gebrauch an einen Spannerarm ausgeführt ist, wobei der Fluidkanal (24, 143) im geschlossenen Ende des Kolbens ausgebildet ist.

2. Hydraulischer Spanner nach Anspruch 1, wobei das geschlossene Ende des Kolbens (40) kugelförmig ist, um im Gebrauch in eine komplementär geformte Aussparung in einem Motorblock einzugreifen, wobei sich der Fluidkanal (24, 143) durch das kugelförmige Ende erstreckt und im Gebrauch mit einer Druckfluidquelle verbunden ist, um einen Fluidkanal von der Druckfluidquelle zu dem Fluidkanal im Körper bereitzustellen.

3. Hydraulischer Spanner nach Anspruch 1 oder 2, wobei das geschlossene Ende des Kolbens (40) einen Drehzapfen (26) an seinem geschlossenen Ende enthält, durch den das geschlossene Ende des Kolbens (40) im Gebrauch an dem Motor schwenkbar befestigt ist.

4. Hydraulischer Spanner nach Anspruch 1 oder 2, wobei das geschlossene Ende des Körpers (20) schwenkbar an einem Montagebolzen angebracht ist, der im Gebrauch am Spannerarm angebracht ist.

5. Hydraulischer Spanner nach einem der Ansprüche 1 bis 3, wobei das geschlossene Ende des Körpers (20) kugelförmig ist und im Gebrauch in eine kugelförmige Aussparung im schwenkbar daran angebrachten Spannerarm eingreift.

6. Hydraulischer Spanner nach Anspruch 1 oder Anspruch 5, der weiterhin eine O-Ring-Dichtung aufweist, die im Gebrauch zwischen dem oder jedem Kugelförmigen geschlossenen Ende und seiner zugehörigen kugelförmigen Aussparung (28) in Eingriff steht.

7. Hydraulisches Spannersystem, das Folgendes umfasst:
einen Motor (76); einen Spannerarm (50) und einen hydraulischen Spanner nach einem der vorhergehenden Ansprüche.

## Revendications

1. Tendeur hydraulique comportant :
un corps creux (20) généralement cylindrique présentant une extrémité fermée et une extrémité ouverte ;
un piston creux (40) présentant une extrémité fermée (44) et une extrémité ouverte (45), ledit piston (40) étant logé de façon coulissante à l'intérieur dudit corps creux (20), ladite extrémité ouverte (45) dudit piston (40) étant logée de façon coulissante dans ledit corps (20) pour former une chambre (23) à fluide avec ledit corps (20) ;
un ressort (60) positionné à l'intérieur dudit piston creux (40), ledit ressort (60) sollicitant ledit piston (40) dans un sens tendant à le faire dépasser dudit corps (20) ;
un passage (24, 143) à fluide s'étendant de la chambre (23), en cours d'utilisation, à une source de fluide sous pression (25, 125) de façon à relier ladite source de fluide sous pression (25, 125) à ladite chambre (23) ; et
un clapet anti-retour (100, 200) positionné de façon à permettre un écoulement de fluide dans la chambre (23) à fluide à partir du passage (24, 143) à fluide tout en bloquant l'écoulement dans le sens inverse ;
**caractérisé en ce que** ladite extrémité fermée (44) du piston est prévue pour un montage pivotant dudit piston, en cours d'utilisation, sur un moteur ; et **en ce que** ladite extrémité fermée dudit corps (20) est prévue pour un montage pivotant dudit corps (20), en cours d'utilisation, sur un bras de tendeur, ledit passage (24, 143) à fluide étant formé dans l'extrémité fermée dudit piston.

2. Tendeur hydraulique selon la revendication 1, l'extrémité fermée du piston (40) étant de forme sphérique en vue de s'engager, en cours d'utilisation, dans un évidement de forme complémentaire dans un bloc moteur, ledit passage (24, 143) à fluide s'étendant à travers ladite extrémité de forme sphérique et, en cours d'utilisation, se raccordant à une source de fluide sous pression de façon à constituer un passage à fluide de ladite source de fluide sous pression audit passage à fluide dans ledit corps.

3. Tendeur hydraulique selon la revendication 1 ou la revendication 2, ladite extrémité fermée dudit piston (40) comprenant une goupille (26) formant pivot à son extrémité fermée au moyen de laquelle, en cours d'utilisation, ladite extrémité fermée dudit piston (40) est fixée de façon pivotante avec ledit moteur.

4. Tendeur hydraulique selon la revendication 1 ou la revendication 2, ladite extrémité fermée dudit corps (20) étant montée de façon pivotante sur une goupille de montage qui, en cours d'utilisation, est montée sur ledit bras de tendeur.

5. Tendeur hydraulique selon l'une quelconque des revendications 1 à 3, ladite extrémité fermée dudit corps (20) étant de forme sphérique et s'engageant, en cours d'utilisation, dans un évidement de forme sphérique dans ledit bras de tendeur monté de façon pivotante sur celui-ci.

6. Tendeur hydraulique selon la revendication 1 ou la revendication 5, comportant en outre un joint torique qui, en cours d'utilisation, s'engage entre la ou chaque extrémité fermée de forme sphérique et l'évidement (28) de forme sphérique qui lui est associé.

7. Système de tendeur hydraulique comportant :
un moteur (76) ; un bras (50) de tendeur ; et
un tendeur hydraulique selon l'une quelconque des revendications précédentes.
